# EUROPEAN PATENT SPECIFICATION

(11) **EP 1 520 310 B1**
(45) Date of publication and mention of the grant of the patent: **24.08.2011**
(21) Application number: 03716174.2
(22) Date of filing: 26.02.2003
(51) Int. Cl.: H01M 4/86, H01M 4/88

(54) **PRODUCTION OF CATALYST COATED MEMBRANES**
VERFAHREN ZUR HERSTELLUNG KATALYSATORBESCHICHTETER MEMBRANEN
PRODUCTION DE MEMBRANES RECOUVERTES D'UN CATALYSEUR

(30) Priority: 26.02.2002 US 360239 P
(43) Date of publication of application: 06.04.2005
(73) Proprietor: E.I. DU PONT DE NEMOURS AND COMPANY, Wilmington, DE 19898 (US)
(72) Inventor: PRUGH, David, Neville, Sayer, PA 18840 (US); BRION, Lester, Ray, Jr., Monroeton, PA 18832 (US); MORGAN, Walter, John, Canton, PA, 17724 (US)
(74) Representative: Hirsch & Associés
(86) International application number: PCT/US2003/005706
(87) International publication number: WO 2003/073540

(56) References cited:
- WO-A-01/65623
- WO-A-02/05371
- US-A- 6 074 692
- PATENT ABSTRACTS OF JAPAN vol. 1995, no. 10, 30 November 1995 (1995-11-30) & JP 7 176317 A (SANYO ELECTRIC CO LTD), 14 July 1995 (1995-07-14)
- PATENT ABSTRACTS OF JAPAN vol. 2000, no. 23, 10 February 2001 (2001-02-10) & JP 2001 160405 A (ASAHI GLASS CO LTD), 12 June 2001 (2001-06-12)

## Description

### FIELD OF THE INVENTION

This invention relates to a method for the production of catalyst coated membranes for use in electrochemical cells, especially catalyst coated membranes for use in fuel cells.

### BACKGROUND OF THE INVENTION

A variety of electrochemical cells falls within a category of cells often referred to as solid polymer electrolyte ("SPE") cells. An SPE cell typically employs a membrane of a cation exchange polymer that serves as a physical separator between the anode and cathode while also serving as an electrolyte. SPE cells can be operated as electrolytic cells for the production of electrochemical products or they may be operated as fuel cells.

Fuel cells are electrochemical cells that convert reactants, namely fuel and oxidant fluid streams, to generate electric power and reaction products. A broad range of reactants can be used in fuel cells and such reactants may be delivered in gaseous or liquid streams. For example, the fuel stream may be substantially pure hydrogen gas, a gaseous hydrogen-containing reformate stream, or an aqueous alcohol, for example methanol in a direct methanol fuel cell (DMFC). The oxidant may, for example, be substantially pure oxygen or a dilute oxygen stream such as air.

In SPE fuel cells, the solid polymer electrolyte membrane is typically perfluorinated sulfonic acid polymer membrane in acid form. Such fuel cells are often referred to as proton exchange membrane ("PEM") fuel cells. The membrane is disposed between and in contact with the anode and the cathode. Electrocatalysts in the anode and the cathode typically induce the desired electrochemical reactions and may be, for example, a metal black, an alloy or a metal catalyst substrateed on a substrate, e.g., platinum on carbon. SPE fuel cells typically also comprise a porous, electrically conductive sheet material that is in electrical contact with each of the electrodes, and permit diffusion of the reactants to the electrodes. In fuel cells that employ gaseous reactants, this porous, conductive sheet material is sometimes referred to as a gas diffusion layer and is suitably provided by a carbon fiber paper or carbon cloth. An assembly including the membrane, anode and cathode, and gas diffusion layers for each electrode, is sometimes referred to as a membrane electrode assembly ("MEA"). Bipolar plates, made of a conductive material and providing flow fields for the reactants, are placed between a number of adjacent MEAs. A number of MEAs and bipolar plates are assembled in this manner to provide a fuel cell stack.

For the electrodes to function effectively in SPE fuel cells, effective electrocatalyst sites must be provided. Effective electrocatalyst sites have several desirable characteristics: (1) the sites are accessible to the reactant, (2) the sites are electrically connected to the gas diffusion layer, and (3) the sites are ionically connected to the fuel cell electrolyte. In order to improve ionic conductivity, ion exchange polymers are often incorporated into the electrodes. In addition, incorporation of ion exchange polymer into the electrodes can also have beneficial effects with liquid feed fuels. For example, in a direct methanol fuel cell, ion exchange polymer in the anode makes it more wettable by the liquid feed stream in order to improve access of the reactant to the electrocatalyst sites.

In electrodes for some fuel cells employing gaseous feed fuels, hydrophobic components such as polytetrafluoroethylene ("PTFE") are typically employed, in part, to render electrodes less wettable and to prevent "flooding". Flooding generally refers to a situation where the pores in an electrode become filled with water formed as a reaction product, such that the flow of the gaseous reactant through the electrode becomes impeded.

Essentially two approaches have been taken to form electrodes for SPE fuel cells. In one, the electrodes are formed on the gas diffusion layers by coating electrocatalyst and dispersed particles of PTFE in a suitable liquid medium onto the gas diffusion layer, e.g., carbon fiber paper. The carbon fiber paper with the electrodes attached and a membrane is then assembled into an MEA by pressing such that the electrodes are in contact with the membrane. In MEA's of this type, it is difficult to establish the desired ionic contact between the electrode and the membrane due to the lack of intimate contact. As a result, the interfacial resistance may be higher than desired. In the other main approach for forming electrodes, electrodes are formed onto the surface of the membrane. A membrane having electrodes so formed is often referred to as a catalyst coated membrane ("CCM"). Employing CCMs can provide improved performance over forming electrodes on the gas diffusion layer but CCMs are typically more difficult to manufacture.

Various manufacturing methods have been developed for manufacturing CCMs. Many of these processes have employed electrocatalyst coating slurries containing the electrocatalyst and the ion exchange polymer and, optionally, other materials such as a PTFE dispersion. The ion exchange polymer in the membrane itself, and in the electrocatalyst coating solution could be employed in either hydrolyzed or unhydrolyzed ion-exchange polymer (sulfonyl fluoride form when perfluorinated sulfonic acid polymer is used), and in the latter case, the polymer must be hydrolyzed during the manufacturing process. Techniques that use unhydrolyzed polymer in the membrane, electrocatalyst composition or both can produce excellent CCMs but are difficult to apply to commercial manufacture because a hydrolysis step and subsequent washing steps are required after application of the electrode. In some techniques, a "decal" is first made by depositing the electrocatalyst coating solution on another substrate, removing the solvent and then transferring and adhering the resulting decal to the membrane. These techniques also can produce good results but mechanical handling and placement of decals on the membrane are difficult to perform in high volume manufacturing operations.

A variety of techniques have been developed for CCM manufacture which apply an electrocatalyst coating solution containing the ion exchange polymer in hydrolyzed form directly to membrane also in hydrolyzed form. However, the known methods again are difficult to employ in high volume manufacturing operations. Known coating techniques such as spraying, painting, patch coating and screen printing are typically slow, can cause loss of valuable catalyst and require the application of relatively thick coatings. Thick coatings contain a large amount of solvent and cause swelling of the membrane that causes it to sag, slump, or droop, resulting in loss of dimensional control of the membrane, handling difficulties during processing, and poor electrode formation.

Attempts have been made to overcome such problems for mass production processes. For example, in U.S. Patent No. 6,074,692, a slurry containing the electrocatalyst in a liquid vehicle such as ethylene or propylene glycol is sprayed on the membrane while the membrane is held in a tractor clamp feed device. This patent teaches pretreating the membrane with the liquid vehicle prior to the spraying operation to decrease the swelling problems. However, processes employing such pretreatment steps are complicated, difficult to control, and require the removal of large amounts of the vehicle in a drying operation. Such drying operations are typically slow and require either disposal or recycling of large quantities of the vehicle to comply with applicable environmental requirements.

WO 01/65623 discloses a method for preparing an assembly comprising at least an electrode having an active surface, and a heat-stable polymer membrane, comprising the steps of:
a) pouring on a support a heat-stable polymer so as to obtain a heat-stable polymer solution film; then
b) partly drying said heat-stable polymer solution film by evaporating the solvent from said solution;
c) depositing an electrode on the surface of said heat-stable polymer solution film, during the drying process, before it is completely dry, the active surface of the electrode facing said surface, so as to obtain an assembly comprising a heat-stable polymer membrane and said electrode;
d) completely drying said assembly resulting from step c); then
e) separating the assembly comprising said membrane and said electrode from the substrate.

It is also disclosed an electrode-membrane and electrode-membrane-electrode (EME) assemblies obtained by said method and a fuel cell comprising said assemblies.

Accordingly, a process is needed which is suitable for the high volume production of Catalyst Coated Membranes and which avoids problems associated with prior art processes. Further, a process is needed which is suitable for the direct application of an electrocatalyst coating composition to a membrane in hydrolyzed form which avoids the swelling problems associated with known processes and which does not require complicated pre-treatment or post-treatment process steps.

### SUMMARY OF THE INVENTION

In a first aspect, the invention provides a process for manufacturing a catalyst coated membrane comprising:
(a) applying at least one electrocatalyst coating composition to an element comprising a polymer membrane having a first and second surface, and a first dimensionally stable temporary substrate, wherein the coating composition is applied to at least portions of the first surface of the polymer membrane;
(b) drying the electrocatalyst coating composition to form at least one first electrode on the polymer membrane of the element;
(c) applying a second dimensionally stable temporary substrate to the at least one first electrode formed in step (b);
(d) removing the first dimensionally stable temporary substrate from the polymer membrane;
(e) applying at least one electrocatalyst coating composition to at least a portion of the second surface of the polymer membrane; and
(f) drying the electrocatalyst coating composition on the polymer membrane to form a sandwich comprising the at least one second electrode, the polymer membrane, the at least one first electrode and the second dimensionally stable temporary substrate.
In the first aspect, the invention also process further comprising:
(g) removing the second dimensionally stable temporary substrate to form a catalyst coated membrane comprising a polymer membrane sandwiched between the at least one first and second electrodes

In the first aspect, the invention also provides a process wherein applying at least one electrocatalyst coating composition is accomplished by flexographic printing.

In a first aspect, the invention also further comprises applying at least one nonelectrocatalytic coating composition to form a nonelectrocatalytic layer over at least part of the same area of the substrate which is covered by an electrode layer.

In a second aspect, the invention provides for the application of the electrocatalyst coating composition and drying steps to be repeated to form multiple electrode layers covering the same part of the surface of the substrate. If desired, the process advantageously provides multiple electrode layers that vary in composition. In addition or alternatively, the application of the electrocatalyst coating composition may advantageously provide an electrode layer with a predetermined nonuniform distribution of electrocatalyst across the electrode layer.

It is also disclosed a fuel cell comprising a catalyst coated membrane prepared by a process comprising:
(a) applying at least one electrocatalyst coating composition to an element comprising a polymer membrane having a first and second surface, and a first dimensionally stable temporary substrate, wherein the coating composition is applied to at least portions of the first surface of the polymer membrane;
(b) drying the electrocatalyst coating composition to form at least one first electrode on the polymer membrane of the element;
(c) applying a second dimensionally stable temporary substrate to the at least one first electrode formed in step (b);
(d) removing the first dimensionally stable temporary substrate from the polymer membrane;
(e) applying at least one electrocatalyst coating composition to at least a portion of the second surface of the polymer membrane; and
(f) drying the electrocatalyst coating composition on the polymer membrane to form a sandwich comprising the at least one second electrode, the polymer membrane, the at least one first electrode and the second dimensionally stable temporary substrate.

The process in accordance with the invention is extremely well-suited to high volume commercial manufacture of catalyst coated membranes. Although any type of printing method may be used to apply the electrocatalyst coating composition, flexographic printing provides thin, well-distributed layers of the electrocatalyst composition and avoids problems associated with coating techniques that employ large quantities of solvent. Alternately, pad printing may be used to selectively apply the electrocatalyst coating composition. The process is extremely versatile and can provide electrodes in any of a wide variety of shapes and patterns and, if desired, can have electrocatalyst or other electrode materials that vary in amount or composition across the electrode, through the thickness of the electrode or both.

### BRIEF DESCRIPTION OF THE DRAWINGS

Figure 1 shows a process in accordance with the invention employing first and second dimensionally stable temporary substrates and coating stations to apply electrocatalyst compositions to the membrane to form electrode layers on the membrane.
Figure 2 is a schematic illustration of the element 10 showing polymer membrane 12, having a first surface 12' and a second surface 12", and a dimensionally stable substrate 11.

### DETAILED DESCRIPTION OF THE INVENTION

This invention provides a process for manufacturing catalyst coated membranes that employs, for example, flexographic or pad, screen printing technology, etc., for applying an electrocatalyst coating composition onto an element comprising a membrane, having first and second surfaces, and a first dimensionally stable, temporary substrate. The coating is applied to the first surface of the membrane. After drying to form a first electrode on the membrane, a second dimensionally stable, temporary substrate is applied to the dried first electrode. The first dimensionally stable, temporary substrate is then removed. This is followed by the application of an electrocatalyst coating composition onto the second surface of the membrane, and drying to form a sandwich comprising first and second electrodes on both sides of the polymer membrane, wherein the first electrode is protected with the second dimensionally stable, temporary substrate. This substrate may be then be removed to form a catalyst coated membrane that is useful in making fuel cells.

### Electrocatalyst Coating Composition:

The process of the present invention employs electrocatalyst coating compositions which are preferably adapted for use in the flexographic or pad printing process. The compositions include an electrocatalyst and an ion exchange polymer in a suitable liquid medium. The ion exchange polymer may perform several functions in the resulting electrode including serving as a binder for the electrocatalyst and improving ionic conductivity to catalyst sites. Optionally, other components are included in the composition, e.g., PTFE in dispersion form.

Electrocatalysts in the composition are selected based on the particular intended application for the CCM. Electrocatalysts suitable for use in the present invention include one or more platinum group metals such as platinum, ruthenium, rhodium, and iridium and electroconductive oxides thereof, and electroconductive reduced oxides thereof. The catalyst may be supported or unsupported. For direct methanol fuel cells, a (Pt-Ru)O_{X} electocatalyst has been found to be useful. One particularly preferred catalyst composition for hydrogen fuel cells is platinum on carbon, for example, 60 wt % carbon, 40 wt % platinum, obtainable from E-Tek Corporation Natick, MA. These compositions when employed in accordance with the procedures described herein, provided particles in the electrode which are less than 1 µm in size.

Since the ion exchange polymer employed in the electrocatalyst coating composition serves not only as binder for the electrocatalyst particles but also assists in securing the electrode to the substrate, e.g. membrane, it is preferable for the ion exchange polymers in the composition to be compatible with the ion exchange polymer in the membrane. Most preferably, exchange polymers in the composition are the same type as the ion exchange polymer in the membrane.

Ion exchange polymers for use in accordance with the present invention are preferably highly fluorinated ion-exchange polymers. "Highly fluorinated" means that at least 90% of the total number of univalent atoms in the polymer are fluorine atoms. Most preferably, the polymer is perfluorinated. It is also preferred for use in fuel cells for the polymers to have sulfonate ion exchange groups. The term "sulfonate ion exchange groups" is intended to refer to either sulfonic acid groups or salts of sulfonic acid groups, preferably alkali metal or ammonium salts. For applications where the polymer is to be used for proton exchange as in fuel cells, the sulfonic acid form of the polymer is preferred. If the polymer in the electrocatalyst coating composition is not in sulfonic acid form when used, a post treatment acid exchange step will be required to convert the polymer to acid form prior to use.

Preferably, the ion exchange polymer employed comprises a polymer backbone with recurring side chains attached to the backbone with the side chains carrying the ion exchange groups. Possible polymers include homopolymers or copolymers of two or more monomers. Copolymers are typically formed from one monomer which is a nonfunctional monomer and which provides carbon atoms for the polymer backbone. A second monomer provides both carbon atoms for the polymer backbone and also contributes the side chain carrying the cation exchange group or its precursor, e.g., a sulfonyl halide group such a sulfonyl fluoride (-SO₂F), which can be subsequently hydrolyzed to a sulfonate ion exchange group. For example, copolymers of a first fluorinated vinyl monomer together with a second fluorinated vinyl monomer having a sulfonyl fluoride group (-SO₂F) can be used. Possible first monomers include tetrafluoroethylene (TFE), hexafluoropropylene, vinyl fluoride, vinylidine fluoride, trifluoroethylene, chlorotrifluoroethylene, perfluoro (alkyl vinyl ether), and mixtures thereof. Possible second monomers include a variety of fluorinated vinyl ethers with sulfonate ion exchange groups or precursor groups, which can provide the desired side chain in the polymer. The first monomer may also have a side chain that does not interfere with the ion exchange function of the sulfonate ion exchange group. Additional monomers can also be incorporated into these polymers if desired.

Especially preferred polymers for use in the present invention include a highly fluorinated, most preferably perfluorinated, carbon backbone with a side chain represented by the formula -(O-CF₂CFR*_{f}*)a-O-CF₂CFR'*_{f}*SO₃H, wherein R*_{f}* and R'*_{f}* are independently selected from F, Cl or a perfluorinated alkyl group having 1 to 10 carbon atoms, a = 0, 1 or 2. The preferred polymers include, for example, polymers disclosed in U.S. Patent 3,282,875 and in U.S. Patents 4,358,545 and 4,940,525. One preferred polymer comprises a perfluorocarbon backbone and the side chain is represented by the formula -O-CF₂CF(CF₃)-O-CF₂CF₂SO₃H. Polymers of this type are disclosed in U.S. Patent 3,282,875 and can be made by copolymerization of tetrafluoroethylene (TFE) and the perfluorinated vinyl ether CF₂=CF-O-CF₂CF(CF₃)-O-CF₂CF₂SO₂F, perfluoro(3,6-dioxa-4-methyl-7-octenesulfonyl fluoride) (PDMOF), followed by conversion to sulfonate groups by hydrolysis of the sulfonyl fluoride groups and ion exchanging to convert to the acid, also known as the proton form. One preferred polymer of the type disclosed in U.S. Patents 4,358,545 and 4,940,525 has the side chain -O-CF₂CF₂SO₃H. This polymer can be made by copolymerization of tetrafluoroethylene (TFE) and the perfluorinated vinyl ether CF₂=CF-O-CF₂CF₂SO₂F, perfluoro(3-oxa-4-pentenesulfonyl fluoride) (POPF), followed by hydrolysis and acid exchange.

For perfluorinated polymers of the type described above, the ion exchange capacity of a polymer can be expressed in terms of ion exchange ratio ("IXR"). Ion exchange ratio is defined as number of carbon atoms in the polymer backbone in relation to the ion exchange groups. A wide range of IXR values for the polymer is possible. Typically, however, the IXR range for perfluorinated sulfonate polymer is usually about 7 to about 33. For perfluorinated polymers of the type described above, the cation exchange capacity of a polymer is often expressed in terms of equivalent weight (EW). For the purposes of this application, equivalent weight (EW) is defined to be the weight of the polymer in acid form required for neutralization of one equivalent of NaOH. In the case of a sulfonate polymer where the polymer comprises a perfluorocarbon backbone and the side chain is -O-CF₂-CF(CF₃)-O-CF₂-CF₂-SO₃H (or a salt thereof), the equivalent weight range which corresponds to an IXR of about 7 to about 33 is about 700 EW to about 2000 EW. A preferred range for IXR for this polymer is about 8 to about 23 (750 to 1500 EW), most preferably about 9 to about 15 (800 to 1100 EW).

The liquid medium for the catalyst coating composition is one selected to be compatible with the process. It is advantageous for the medium to have a sufficiently low boiling point that rapid drying of electrode layers is possible under the process conditions employed. When using flexographic or pad printing techniques, it is important that the composition not dry so fast that it dries on the flexographic plate or the cliché plate or the pad before transfer to the membrane film.

When flammable constituents are to be employed, the selection should take into consideration any process risks associated with such materials, especially since they will be in contact with the catalyst in use. The medium should also be sufficiently stable in the presence of the ion exchange polymer that, in the acid form, has strong acidic activity. The liquid medium typically will be polar since it should be compatible with the ion exchange polymer in the catalyst coating composition and be able to "wet" the membrane. While it is possible for water to be used as the liquid medium, it is preferable for the medium to be selected such that the ion exchange polymer in the composition is "coalesced" upon drying and not require post treatment steps such as heating to form a stable electrode layer.

A wide variety of polar organic liquids or mixtures thereof can serve as suitable liquid media for the electrocatalyst coating composition. Water in minor quantity may be present in the medium if it does not interfere with the printing process. Some preferred polar organic liquids have the capability to swell the membrane in large quantity although the amount of liquids the electrocatalyst coating composition applied in accordance with the invention is sufficiently limited that the adverse effects from swelling during the process are minor or undetectable. It is believed that solvents with the capability to swell the ion exchange membrane can provide better contact and more secure application of the electrode to the membrane. A variety of alcohols is well suited for use as the liquid medium.

Preferred liquid media include suitable C4 to C8 alkyl alcohols including, n-, iso-, sec- and tert-butyl alcohols; the isomeric 5-carbon alcohols, 1, 2- and 3-pentanol, 2-methyl-1-butanol, 3-methyl, 1-butanol, etc., the isomeric 6-carbon alcohols, e.g. 1-, 2-, and 3-hexanol, 2-methyl-1-pentanol, 3-methyl-1-pentanol, 2-methyl-1-pentanol, 3-methyl, 1-pentanol, 4-methyl-1-pentanol, etc., the isomeric C7 alcohols and the isomeric C8 alcohols, and Dowanol DPM. Cyclic alcohols are also suitable. Preferred alcohols are n-butanol and n-hexanol. Most preferred is n-hexanol.

The amount of liquid medium in the electrocatalyst composition will vary with the type of medium employed, the constituents of the composition, the type of printing equipment employed, desired electrode thickness, process speeds etc. The amount of liquid employed is highly dependent on viscosity of the electrocatalyst composition that is very important to achieve high quality electrodes with a minimum of waste. When n-butanol is employed as the liquid medium, a coating solids content of from about 9 to about 20% by weight is a particularly useful flexographic or pad printing range. Below about 9% solids, viscosity is undesirably low leading to rapid settling of the catalytic particles, physical leaking from coating applicator "fountain" in standard presses and undesirably low print deposition weights. Furthermore, at levels of n-butanol greater than about 91% by weight, undesirable swelling of perfluorinated sulfonic acid membranes can result. Moreover, above about 20 wt %-coating solids, the electrocatalyst coating compositions takes on a paste-like consistency with the associated handling problems. The viscosity of the electrocatalyst coating composition best suited for pad printing is in the range of about 100 to about 2000 centipoise, more typically about 100 to about 1000 centipoise, still more typically about 150 to about 500 centipoise, and most typically about 120 to about 250 centipoise and the viscositiy best suited for flexographic printing is about 8000 to about 15000 centipoise, measured at 1 s⁻¹.

Handling properties of the electrocatalyst coating composition, e.g. drying performance can be modified by the inclusion of compatible additives such as ethylene glycol or glycerin up to 25% by weight based on the total weight of liquid medium.

It has been found that the commercially available dispersion of the acid form of the perfluorinated sulfonic acid polymer, sold by E.I. du Pont de Nemours and Company under the trademark Nafion®, in a water/alcohol dispersion, can be used, as starting material, for the preparation of an electrocatalyst coating composition suitable for use in flexographic or pad printing.

One method of preparation involves the replacement of the lower alcohols and water in the commercially available dispersion with a C4 to C8 alkyl alcohol through a distillation process. The result is a highly stable dispersion of perfluorinated sulfonic acid polymer in a C4 to C8 alkyl alcohol with a water content less than 2%, more typically less than 0.5%. Solids content can be varied up to 20%. Using this modified dispersion as base for the electrocatalyst coating composition, the catalytic metal or carbon black supported catalytic metal required to form an electrode can be added which yields a coating composition with good handling and transfer properties in the process of the present invention.

Another allows the use of C2 & C3 alcohols with a higher miscible water content which can be as high as 20% of the total solvent system. The advantages of such a system is the potential for higher solids content at lower viscosities relative to above formulations. These formulations are better suited for pad printing, providing thicker layer deposition potential as well as utilizing inert gas safety, as well as control of excess dispersion drying in reservoir, on knife blade, on cliché plate etc. Disadvantages are the added brittleness of printed layers along with slight adhesion reduction. These features require more care in drying & handling of the printed layers.

In the electrocatalyst coating composition, it is preferable to adjust the amounts of electrocatalyst, ion exchange polymer and other components, if present, so that the electrocatalyst is the major component by weight of the resulting electrode. Most preferably, the weight ratio of electrocatalyst to ion exchange polymer in the electrode is about 2:1 to about 10:1.

Utilization of the electrocatalyst coating technique in accordance with the process of the present invention can produce a wide variety of printed layers which can be of essentially any thickness ranging from very thick, e.g., 20 µm or more very thin, e.g., 1 µm or less. This full range of thicknesses can be produced without evidence of cracking, loss of adhesion, or other inhomogenieties. Thick layers, or complicated multilayer structures, can be easily achieved by utilizing the pattern registration available using flexographic or pad printing technology to provide multiple layers deposited onto the same area so that the desired ultimate thickness can be obtained. On the other hand, only a few layers or perhaps a single layer can be used to produce very thin electrodes. Typically, a thin layer ranging from 1 to 2 µm may be produced with each printing with lower % solids formulations

The multilayer structures mentioned above permit the electrocatalyst coating to vary in composition, for example the concentration of precious metal catalyst can vary with the distance from the substrate, e.g. membrane, surface. In addition, hydrophilicity can be made to change as a function of coating thickness, e.g., layers with varying ion exchange polymer EW can be employed. Also, protective or abrasion-resistant top layers may be applied in the final layer applications of the electrocatalyst coating.

Composition may also be varied over the length and width of the electrocatalyst coated area by controlling the amount applied as a function of the distance from the center of the application area as well as by changes in coating applied per pass. This control is useful for dealing with the discontinuities that occur at the edges and corners of the fuel cell, where activity goes abruptly to zero. By varying coating composition or plate image characteristics, the transition to zero activity can be made gradual. In addition, in liquid feed fuel cells, concentration variations from the inlet to the outlet ports can be compensated for by varying the electrocatalyst coating across the length and width of the membrane.

### Element:

The element comprises a polymer membrane and a first dimensionally stable temporary substrate.

### Polymer Membrane:

Polymer membranes, for use in accordance with the invention, can be made of the same ion exchange polymers discussed above for use in the electrocatalyst coating compositions. The membranes can be made by known extrusion or casting techniques and have thicknesses which can vary depending upon the application and typically have a thickness of about 350 µm or less. The trend is to employ membranes that are quite thin, i.e., about 50 µm or less. The process in accordance with the present in invention is well-suited for use in forming electrodes on such thin membranes where the problem associated with large quantities of solvent during coating are especially pronounced. While the polymer may be in alkali metal or ammonium salt form during the flexographic or pad printing process, it is preferred for the polymer in the membrane to be in acid form to avoid post treatment acid exchange steps. Suitable perfluorinated sulfonic acid polymer membranes in acid form are available under the trademark Nafion® by E.I. du Pont de Nemours and Company.

Reinforced perfluorinated ion exchange polymer membranes can also be utilized in CCM manufacture by the inventive printing process. Reinforced membranes can be made by impregnating porous, expanded PTFE (ePTFE) with ion exchange polymer. ePTFE is available under the tradename "Goretex" from W. L. Gore and Associates, Inc., Elkton MD, and under the tradename "Tetratex" from Tetratec, Feasterville PA. Impregnation of ePTFE with perfluorinated sulfonic acid polymer is disclosed in U.S. Patents 5,547,551 and 6,110,333.

### Dimensionally Stable Substrate

The first and second dimensionally stable substrates 11 or 15 may be selected from a wide variety of substrates that have dimensional stability during the processing steps of the invention. The substrate may have a release surface or be provided with a release surface by treating or coating it with a substance that would assist in removal of the temporary substrate from the CCM in subsequent steps. Alternately, if the dimensionally stable substrate does not have built-in adhesion or release properties, it may be treated with processes, such as corona or electric discharge plasma treatment processes or agents such as primer sprays or sub-coat layers that are either non-functional or can be removed in downstream post-processing. The temporary substrate has to adhere to the polymer membrane during the printing step, but needs to be easily separated from the membrane or first electrode during subsequent steps without damaging the electrode or the polymer membrane. One example of a treatment for the dimensionally stable substrate is an open array of Nafion® straight fluoro-ionomer "dots" printed first on the substrate.

Some suitable examples of dimensionally stable substrates include polyesters including polyethylene terephthalate, polyethylene naphthanate; polyamides, polycarbonates, fluoropolymers, polyacetals, polyolefins, etc. Some examples of polyester films include Mylar® or Melinex® polyester films, E.I. duPont de Nemours and Company, Wilmington, DE. Some temporary substrates having high temperature stability include polyimide films such as Kapton®, E.I. duPont de Nemours and Company, Wilmington, DE. Thickness of the dimensionally stable substrate may vary from 1 mil to 10 mils. The preferred material is of 2 mil thickness and has a very smooth surface (e.g. no slip additives have been incorporated into the film).

### Process For Preparation of CCMs:

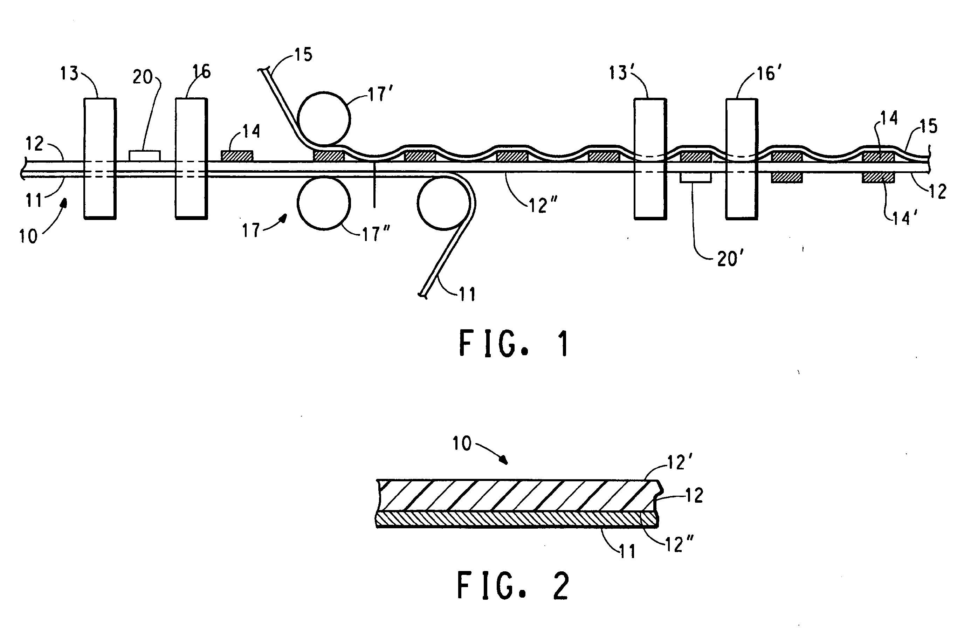

As shown in Figures 1, an element **10** comprising a polymer membrane **12,** having a first surface **12'** and a second surface **12",** and a dimesionally stable substrate **11** is fed past at least one printing station **13,** and drying station **16.** Electrocatalyst coating composition **20** may be applied at the print station **13** onto element **10** and dried to form a first electode **14** on the surface **12'** of membrane **12** of element **10.** Alternatively, the printing and drying stations may be located in a single device. The printing station **13** may be selected from a wide variety of printing stations such as for example rotary screen printing, offset, gravure, pad or flexographic printing. Typically flexographic or pad printing are used because they apply the electrodes to only the desired locations on the membrane thus minimizing the loss of valuable catalyst. Drying may be accomplished at ambient temperatures or the coated element may be dried at temperatures up to about 60 °C, preferably in the range of about 45 to about 55 °C. Infrared or forced air convection dryers of the type typically used in the printing or film coating industry may be used. Some vendors of such equipment include MarkAndy, (St. Louis, MO), or Pemarco from basic printing or Black - Clawson (Fulton, NY) or Bachofen+Meier AG (Bulach, Switzerland) from film coating.

Additional printing stations (not shown) and drying stations (not shown) may be present to apply additional electrocatalyst coating compositions to the element **10.** The sandwich comprising the first dimensionally stable substrate **11,** the membrane **12** with first electrode **14** formed thereon is led past an application device, such as a low pressure laminator **17** having rolls **17'** and **17",** to apply the second dimensionally stable substrate **15** such that the second dimensionally stable substrate **15** is adjacent first electrode **14.** Alternately the second second dimensionally stable substrate may be applied by pressing onto the first electrode **14.** The first dimensionally stable substrate **11,** is then removed from surface **12"** of membrane **12,** for example, by peeling manually or automatically using equipment to remove the first dimensionally stable substrate **11.** Electrocatalyst coating composition **20'** is applied to surface **12"** of the membrane using at least one printing station **13',** and is then led past drying station **16'** to form a second electrode **14'** on the membrane **12.** Additional printing stations (not shown) and drying stations (not shown) may be present to apply additional electrocatalyst coating compositions to so formed second electrode **14'.** Typically electrocatalyst coating composition **20'** is applied such that after drying the second electrode **14'** is in registration with first electrode **14.** The so formed catalyst coated membrane comprising the membrane 12 sandwiched between first and second electrodes **14** and **14'** is still protected on the side of the first electrode **14** with second dimensionally stable substrate **15.** This second dimensionally stable substrate 15 may be peeled off to form a catalyst-coated membrane that is useful in making fuel cells.

The so formed catalyst coated membrane may then be provided with post treatments such as calendering, vapor treatment to affect water transport, or liquid extraction to remove trace residuals from any of the above earlier steps. If the membrane dispersion or solution used was the precursor of the highly fluorinated ionomer, after application of the solution or dispersion the sandwich formed may be subjected to a chemical treatment to convert the precursor to the ionomer.

### EXAMPLES

### Example 1:

### Polymer Membrane:

The polymer membrane was a proton exchange membrane, Nafion®, type NR112, E.I. DuPont, Wilmington, DE, with a thickness of 0.002" (0.00508 cm) that was supplied with a coversheet of 0.5 mil polyester and a backing sheet of 2 mil polyester, that serves as the first dimensionally stable temporary substrate. The coversheet was removed so that one side of the membrane was exposed for the coating process.

### Electrocatalyst coating composition:

The electrocatalyst coating composition or "cathode ink" was prepared by roll-milling the following ingredients with 0.25" (0.635 cm) Zirconia milling media for 72 hours. Care was taken to keep the mixture below its flash point.

| Ingredient | Amount (weight %) |
|---|---|
| n-Hexanol | 82 |
| FC60 Pt/C catalyst, purchased from Johnson-Matthey, Inc., West Deptford, NJ | 15 |
| Nafion® EW990, E.I. DuPont, Wilmington, DE | 3 |

### Process:

A Catalyst Coated Membrane was prepared by flexograhphic printing of the cathode ink onto a specific area of the exposed side of the membrane, so that the Pt loading was 0.4 mg/cm2. Solvent was removed by oven drying at approximately 125 °F (51.67 °C) for 60 minutes.

A second dimensionally stable temporary substrate, Type 200D polyester film, 0.002" (0.00508 cm) thick, purchased from E.I. DuPont, Wilmington, DE, was applied over the ink coated side of the coated membrane using a 70 °F (21.1 °C) laminator from Western Magnum Corp, EI Segundo, CA.

The laminate was then placed on a flat surface and the original backing material (the first dimensionally stable substrate) was then removed by peeling.

A second electrocatalyst coating composition, also known as an "anode ink" dispersion, was prepared using the same milling process described above, and the following composition:

| Ingredient | Amount (weight %) |
|---|---|
| n-Hexanol | 82 |
| Johnson-Matthey FCA-8X Pt/Ru/C catalyst | 15 |
| Nafion® EW990 | 3 |

This anode ink was printed by a flexographic process onto a specific area of membrane, so that the Pt loading was 0.4 mg/cm2. The anode ink was printed in registration with the cathode, while the cathode dimensionality was maintained by the stable temporary substrate. Solvent was removed by oven drying at approximately 125 °F (51.67 °C) for 60 minutes.

The dimensional change of the final product versus the original coated size was 0% to -1%.

### Example 2:

Example 1 was repeated with the following exception: the polymer membrane was a proton exchange membrane, Nafion® type NE112, with a thickness of 0.002" (0.00508 cm), purchased from E.I. DuPont, Wilmington, DE, that is supplied a free-standing film, without a coversheet and a backing. A first dimensionally stable substrate, Type 200D polyester film, 0.002" (0.00508 cm) thick, purchased from E.I. DuPont, Wilmington, DE, was laminated at a temperature of 70 °F (21.1 °C) to one side of the free-standing membrane with a Riston® HRL-24 laminator purchased from E.I. DuPont, Wilmington, DE.

Electrocatalyst coating compositions or "anode and cathode inks" were prepared by roll-milling the following ingredients with 0.25" (0.635 cm) Zirconia milling media for 72 hours. Care was taken to keep the mixture below its flash point.

| Ingredient | Amount (weight %) |
|---|---|
| n-Hexanol | 8 |
| Type FC60 Pt/C catalyst, purchased from Johnson-Matthey, Inc., West Deptford, NJ | 15 |
| Nafion® EW990, purchased from E.I. DuPont, Wilmington, DE | 3 |

The anode and cathode inks were printed onto specific areas on opposite sides of the membrane, so that the Pt loading for each application was 0.5 mg/cm².

The dimensional change of the final product versus the original coated size was 0% to -0.7%.

### Example 3:

Example 1 was repeated with the following exception: the second dimensionally stable substrate used was Type 516/400 Melinex®, 0.004" (0.001 cm) thick, purchased from Wilmington, DE.

The dimensional change of the final product versus the original coated size was -0.5% to -2%.

### Control:

Example 1 was repeated with the following exception: the cover and backing sheets were both peeled off prior to coating. The anode and cathode inks contained carbon black in place of catalyst and had the following composition:

| Ingredient | Amount (weight %) |
|---|---|
| n-Hexanol | 87 |
| Carbon black purchased from Cabot Corp., Boston, MA | 10 |
| Nafion® EW990, purchased from E.I. DuPont, Wilmington, DE | 3 |

A second dimensionally stable temporary substrate was not applied to the first ink coated side of the coated membrane prior to the second ink application.

The dimensional change of the final product versus the original coated size was +1.5% to -0.8%.

With the absence of the backing sheet or the first dimensionally stable temporary substrate during the first coating, and/or the absence of the second dimensionally stable temporary substrate we have observed a reduction in x- and y- dimension during the drying of an electrode area. This reduction was measured at 3%. Dimensional change due to humidity has also been observed. In one case, a length change of 8% was observed when the membrane electrode assembly was subjected to a 30% change in relative humidity. These changes are prevented or minimized using the process of the invention.

## Claims

1. A process for manufacturing a catalyst coated membrane comprising:
(a) applying at least one electrocatalyst coating composition to an element comprising polymer membrane having a first and a second surface, and a first dimensionally stable temporary substrate, wherein the coating composition is applied to at least portions of the first surface of the polymer membrane;
(b) drying the electrocatalyst coating composition to form at least one first electrode on the polymer membrane of the element;
(c) applying a second dimensionally stable temporary substrate to the at least one first electrode formed in step (b);
(d) removing the first dimensionally stable temporary substrate from the polymer membrane;
(e) applying at least one electrocatalyst coating composition to at least a portion of the second surface of the polymer membrane; and
(f) drying the electrocatalyst coating composition on the polymer membrane to form a sandwich comprising the at least one second electrode, the polymer membrane, the at least one first electrode and the second dimensionally stable temporary substrate.

2. The process of Claim 1 wherein the element is prepared by applying a first dimensionally stable temporary substrate to the polymer membrane.

3. The process of Claim 1 further comprising:
(g) removing the second dimensionally stable temporary substrate to form a catalyst coated membrane comprising a polymer membrane sandwiched between the at least one first and second electrodes.

4. The process of Claim 1 wherein the electrocatalyst coating composition comprises an electrocatalyst, an ion exchange polymer and a liquid medium.

5. The process of Claim 4 wherein the ion exchange polymer is perfluorinated.

6. The process of Claim 2 wherein the electrocatalyst coating composition further comprises fluorinated polymer.

7. The process of Claim 6 wherein the fluorinated polymer is a PTFE fibril.

8. The process of Claim 1 wherein the applying at least one electrocatalyst coating composition is accomplished by flexographic printing.

9. The process of Claim 1 wherein the application of the electrocatalyst coating composition and drying steps are repeated to form multiple electrode layers covering the same part of the surface of the membrane.

10. The process of Claim 1 wherein the application of the electrocatalyst coating composition and drying steps are repeated to form multiple electrode layers that vary in composition among said multiple layers.

11. The process of Claim 1 further comprising applying at least one nonelectrocatalytic coating composition to form a nonelectrocatalytic layer over at least part of the same area of the substrate which is covered by an electrode layer.

12. The process of Claim 1 wherein electrocatalyst coating composition is applied onto the opposite surface of the polymer membrane to form the second electrode is in registration with the first electrode on the first surface.

13. The process of Claim 1 wherein catalyst coating composition applied to the first surface is different from that applied to the second surface of the polymer membrane.

14. The process of Claim 1 wherein the first and second dimensionally stable substrates are selected from the group consisting of temporary substrate is selected from the group consisting of polyesters; polyamides, polycarbonates, fluoropolymers, polyacetals, polyolefins, and polyimides.

## Patentansprüche

1. Verfahren zur Herstellung einer katalysatorbeschichteten Membran, das aufweist:
(a) Aufbringen mindestens einer Elektrokatalysator-Beschichtungszusammensetzung auf ein Element, das eine Polymermembran mit einer ersten und einer zweiten Oberfläche und ein erstes formbeständiges temporäres Substrat aufweist, wobei die Beschichtungszusammensetzung auf zumindest Teile der ersten Oberfläche der Polymermembran aufgebracht wird;
(b) Trocknen der Elektrokatalysator-Beschichtungszusammensetzung, um auf der Polymermembran des Elements mindestens eine erste Elektrode auszubilden;
(c) Aufbringen eines zweiten formbeständigen temporären Substrats auf die im Schritt (b) gebildete mindestens eine erste Elektrode;
(d) Entfernen des ersten formbeständigen temporären Substrats von der Polymermembran;
(e) Aufbringen mindestens einer Elektrokatalysator-Beschichtungszusammensetzung auf zumindest einen Teil der zweiten Oberfläche der Polymermembran; und
(f) Trocknen der Elektrokatalysator-Beschichtungszusammensetzung auf der Polymermembran, um ein Schichtelement zu formen, das die mindestens eine zweite Elektrode, die Polymermembran, die mindestens eine erste Elektrode und das zweite formbeständige temporäre Substrat aufweist.

2. Verfahren nach Anspruch 1, wobei das Element durch Aufbringen eines ersten formbeständigen temporären Substrats auf die Polymermembran hergestellt wird.

3. Verfahren nach Anspruch 1, das ferner aufweist:
(g) Entfernen des zweiten formbeständigen temporären Substrats, um eine katalysatorbeschichtete Membran zu formen, die eine zwischen die mindestens eine erste und die mindestens eine zweite Elektrode geschichtete Polymermembran aufweist.

4. Verfahren nach Anspruch 1, wobei die Elektrokatalysator-Beschichtungszusammensetzung einen Elektrokatalysator, ein Ionenaustauschpolymer und ein flüssiges Medium aufweist.

5. Verfahren nach Anspruch 4, wobei das Ionenaustauschpolymer perfluoriert ist.

6. Verfahren nach Anspruch 2, wobei die Elektrokatalysator-Beschichtungszusammensetzung ferner ein fluoriertes Polymer aufweist.

7. Verfahren nach Anspruch 6, wobei das fluorierte Polymer eine PTFE-Fibrille ist.

8. Verfahren nach Anspruch 1, wobei das Aufbringen mindestens einer Elektrokatalysator-Beschichtungszusammensetzung durch Flexodruck ausgeführt wird.

9. Verfahren nach Anspruch 1, wobei die Schritte zum Aufbringen der Elektrokatalysator-Beschichtungszusammensetzung und zum Trocknen wiederholt werden, um mehrere Elektrodenschichten zu bilden, die den gleichen Teil der Membranoberfläche bedecken.

10. Verfahren nach Anspruch 1, wobei die Schritte zum Aufbringen der Elektrokatalysator-Beschichtungszusammensetzung und zum Trocknen wiederholt werden, um mehrere Elektrodenschichten zu bilden, die sich in der Zusammensetzung zwischen den mehreren Schichten ändern.

11. Verfahren nach Anspruch 1, das ferner das Aufbringen mindestens einer nicht elektrokatalytischen Beschichtungszusammensetzung aufweist, um eine nicht elektrokatalytische Schicht über zumindest einem Teil der gleichen Fläche des Substrats auszubilden, die durch eine Elektrodenschicht bedeckt wird.

12. Verfahren nach Anspruch 1, wobei die Elektrokatalysator-Beschichtungszusammensetzung auf die gegenüberliegende Oberfläche der Polymermembran aufgebracht wird, um die zweite Elektrode auszubilden, die mit der ersten Elektrode auf der ersten Oberfläche in Deckung ist.

13. Verfahren nach Anspruch 1, wobei sich die auf die erste Oberfläche aufgebrachte Katalysator-Beschichtungszusammensetzung von derjenigen unterscheidet, die auf die zweite Oberfläche der Polymermembran aufgebracht wird.

14. Verfahren nach Anspruch 1, wobei die ersten und zweiten formbeständigen Substrate aus der Gruppe ausgewählt sind, die aus einem temporären Substrat besteht, das unter Polyestern, Polyamiden, Polycarbonaten, Fluorpolymeren, Polyacetalen, Polyolefinen und Polyimiden ausgewählt ist.

## Revendications

1. Procédé pour la fabrication d'une membrane recouverte d'un catalyseur comprenant:
(a) l'application d'au moins une composition de revêtement d'électrocatalyseur sur un élément comprenant une membrane de polymère possédant une première et une deuxième surfaces, et un premier substrat temporaire dimensionnellement stable, dans lequel la composition de revêtement est appliquée sur au moins des portions de la première surface de la membrane de polymère;
(b) le séchage de la composition de revêtement d'électrocatalyseur pour former au moins une première électrode sur la membrane de polymère de l'élément;
(c) l'application d'un deuxième substrat temporaire dimensionnellement stable sur la au moins une première électrode formée dans l'étape (b);
(d) le retrait du premier substrat temporaire dimensionnellement stable à partir de la membrane de polymère;
(e) l'application d'au moins une composition de revêtement d'électrocatalyseur sur au moins une portion de la deuxième surface de la membrane de polymère; et
(f) le séchage de la composition de revêtement d'électrocatalyseur sur la membrane de polymère pour former un sandwich comprenant la au moins une deuxième électrode, la membrane de polymère, la au moins une première électrode et le deuxième substrat temporaire dimensionnellement stable.

2. Procédé selon la revendication 1, dans lequel l'élément est préparé par l'application d'un premier substrat temporaire dimensionnellement stable sur la membrane de polymère.

3. Procédé selon la revendication 1 comprenant en outre:
(g) le retrait du deuxième substrat temporaire dimensionnellement stable pour former une membrane recouverte d'un catalyseur comprenant une membrane de polymère en sandwich entre les au moins une première et deuxième électrodes.

4. Procédé selon la revendication 1, dans lequel la composition de revêtement d'électrocatalyseur comprend un électrocatalyseur, un polymère échangeur d'ions et un milieu liquide.

5. Procédé selon la revendication 4, dans lequel le polymère échangeur d'ions est perfluoré.

6. Procédé selon la revendication 2, dans lequel la composition de revêtement d'électrocatalyseur comprend en outre un polymère fluoré.

7. Procédé selon la revendication 6, dans lequel le polymère fluoré est une fibrille de PTFE.

8. Procédé selon la revendication 1, dans lequel l'application d'au moins une composition de revêtement d'électrocatalyseur est accomplie par une impression flexographique.

9. Procédé selon la revendication 1, dans lequel les étapes d'application de la composition de revêtement d'électrocatalyseur et de séchage sont répétées pour former des couches d'électrode multiples couvrant la même partie de la surface de la membrane.

10. Procédé selon la revendication 1, dans lequel les étapes d'application de la composition de revêtement d'électrocatalyseur et de séchage sont répétées pour former des couches d'électrode multiples qui varient en composition entre lesdites couches multiples.

11. Procédé selon la revendication 1 comprenant en outre l'application d'au moins une composition de revêtement non électrocatalytique pour former une couche non électrocatalytique au-dessus d'au moins une partie de la même zone du substrat qui est couverte par une couche d'électrode.

12. Procédé selon la revendication 1, dans lequel la composition de revêtement d'électrocatalyseur est appliquée sur la surface opposée de la membrane de polymère pour former la deuxième électrode qui est repérée avec la première électrode sur la première surface.

13. Procédé selon la revendication 1, dans lequel la composition de revêtement de catalyseur appliquée sur la première surface est différente de celle appliquée sur la deuxième surface de la membrane de polymère.

14. Procédé selon la revendication 1, dans lequel les premier et deuxième substrats dimensionnellement stables sont choisis dans le groupe constitué d'un substrat temporaire qui est choisi dans le groupe constitué de polyesters, de polyamides, de polycarbonates, de fluoropolymères, de polyacétals, de polyoléfines et de polyimides.
